(19) 

Europäisches
Patentamt
European
Patent Office
Office européen
des brevets

(11) **EP 4 538 076 A1**

(12) **EUROPEAN PATENT APPLICATION**
published in accordance with Art. 153(4) EPC

(43) Date of publication:
**16.04.2025 Bulletin 2025/16**

(21) Application number: **23851945.8**

(22) Date of filing: **10.08.2023**

(51) International Patent Classification (IPC):
*B60K 1/00* (2006.01)   *B60K 7/00* (2006.01)
*B60K 17/04* (2006.01)   *H02K 5/04* (2006.01)
*H02K 7/116* (2006.01)   *H02K 9/22* (2006.01)

(86) International application number:
**PCT/CN2023/112269**

(87) International publication number:
**WO 2024/032724 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022   CN 202210953994**

(71) Applicant: **Shanghai Pangood Power Technology
Co., Ltd.
Shanghai 201615 (CN)**

(72) Inventors:
• GAO, Xu
  **Shanghai 201615 (CN)**
• TANG, Lei
  **Shanghai 201615 (CN)**
• ZHANG, Guangquan
  **Shanghai 201615 (CN)**
• CHEN, Jinhua
  **Shanghai 201615 (CN)**

(74) Representative: **Gerstein, Hans Joachim
Meissner Bolte Patentanwälte
Rechtsanwälte Partnerschaft mbB
Plathnerstraße 3A
30175 Hannover (DE)**

(54) **ELECTRIC DRIVE SYSTEM**

(57) An electric drive system, comprising: motors (200), each motor (200) having an output end surface (2001) and a non-output end surface (2002) which are substantially parallel; speed reducers (100), each speed reducer (100) being transmittingly connected to a wheel (400), the output end surface (2001) of the motor (200) being connected to the side of the speed reducer (100) facing away from the wheel (400), and the motor (200) being transmittingly connected to the speed reducer (100); and a controller (300), wherein the controller (300) has a connecting surface (3001), the center of the connecting surface (3001) is recessed to form a controller cavity (30011), the non-output end surface (2002) of the motor (200) is connected to the connecting surface (3001) of the controller (300), and the motor (200) is partially embedded in the controller cavity (30011) and can be surrounded by a controller cooling structure (320) provided on the inner wall of the controller cavity (30011).

**FIG. 1**

EP 4 538 076 A1

## Description

## FIELD

The present application relates to the technical field of automobile electric drive, and in particular to an electric drive system.

## BACKGROUND

In recent years, the field of new energy vehicles has developed rapidly. An electric drive device is one of the core components of a new energy vehicle, the characteristics of which determine main performance parameters of vehicle driving. A conventional electric drive device generally includes a motor, a reducer and a controller, the controller is configured to control the operation of the motor, and the motor is in transmission connection with a wheel through the reducer to drive the wheel to move.

Since a wheel distance between two wheels is fixed, the design of the motor, the reducer and the controller is limited by the wheel distance. Moreover, the motor, the controller, and the like need to be provided with cooling structures and so on. As power and torque of the motor is required to be continuously improved, the number of the motors and the number of the reducers are expected to be increased, further increasing the difficulty of space design.

## SUMMARY

In order to solve the above problem, an electric drive system is provided according to the present application, which has a compact, stable and reliable structure. The electric drive system can be provided with a cooling structure on the premise of being mounted on two wheels with a fixed wheel distance, so as to improve the space utilization rate.

An electric drive system includes:

at least one motor having an output end face and a non-output end face which are substantially parallel to each other;

at least one reducer, which is in transmission connection with a wheel, where the output end face of the motor is connected to one side of the reducer away from the wheel, and the motor is in transmission connection with the reducer; and

at least one controller having a connecting surface, where the center of the connecting surface is recessed to form a controller cavity, the non-output end face of the motor is connected to the connecting surface of the controller, and part of the motor is embedded in the controller cavity and is surrounded by a controller cooling structure disposed on an inner wall of the controller cavity.

In a preferred embodiment, the motor includes:

a motor housing, where the output end face and the non-output end face are formed on two axial sides of the motor housing, the center of the non-output end face is recessed to form a motor cavity, and the motor cavity is in communication with the controller cavity when the non-output end face is connected to the connecting surface of the controller;

at least one stator located in the motor cavity; and

at least one rotor, where an air gap surface is formed between the rotor and the stator, the air gap surface is parallel to the controller and the reducer, and one of the at least one rotor located on one side of the stator facing the reducer is embedded in the controller cavity.

In a preferred embodiment, the motor further includes:

a rotary transformer chamber embedded in the controller cavity;

an output shaft, where one end of the output shaft is connected to the rotary transformer chamber, and the other end of the output shaft passes through the stator and extends out of the output end face to be connected to the reducer, and the rotor is fixedly connected to the output shaft.

In a preferred embodiment, the inner wall of the controller cavity is recessed to form at least one accommodating cavity, and the controller cooling structure is detachably arranged in the accommodating cavity.

In a preferred embodiment, the center of the output end face is recessed to form an auxiliary cavity, and part of the reducer is embedded in the auxiliary cavity.

In a preferred embodiment, each of the number of the controllers, the number of the motors and the number of the reducers is two. The two controllers are connected in such a way that the connecting surfaces of the two controllers face away from each other. The connecting surface of each of the two controllers is correspondingly connected to the non-output end face of one of the two motors, and the output end face of each of the two motors away from the controller is connected to one of the two reducers, so that the controller, the motor and the reducer on the same side are connected in sequence.

In a preferred embodiment, the two controllers are arranged in a common controller housing, or the two controllers are integrally connected.

In a preferred embodiment, the reducer includes a reducer housing, the controller includes a controller housing, and the motor housing and the controller housing are integrally connected and/or the motor housing and the reducer housing are integrally connected.

In a preferred embodiment, the reducer is a planetary gear reducer. The reducer housing includes a reducer periphery, the controller housing includes a controller periphery, and the motor housing includes a motor periphery. The reducer periphery, the controller periphery and the motor periphery are substantially flush.

In a preferred embodiment, at least one of a bottom of the auxiliary cavity, a bottom of the accommodating cavity, the reducer periphery, the controller periphery and the motor periphery is provided with a reinforcing rib.

Compared with the conventional technology, the technical solutions have the following advantages.

Firstly, the motor, the reducer and the controller are arranged side by side and are integrally connected between two wheels with a fixed wheel distance, and part of the motor is embedded in the controller cavity of the controller, thereby further reducing the overall axial dimension.

Secondly, the controller cooling structure is arranged on the inner wall of the controller cavity, which ensures that the motor, the reducer, the controller and the like can be arranged between the two wheels with a fixed wheel distance, and achieves cooling of the controller and the motor, thereby ensuring the reliable operation of the system.

Thirdly, the motor is an axial field motor, which has the characteristics of small axial dimension, high power density, light weight, large output torque and so on. It can be seen that, according to the embodiment, the motor and the reducer are arranged in a wheel distance direction and are connected integrally, so that more space can be released between the two wheels with a fixed wheel distance to increase the space for designing the reducer.

Fourthly, each motor can output power independently, which omits mechanical differential. With electronic differential, distributed drive can be realized to achieve intelligent control of a whole vehicle. Due to the use of the distributed drive, the whole vehicle has good handling performances, a small turning radius, and stable handling performances, which effectively solves the problems of slope skidding and unilateral skidding.

Fifthly, the two motors and the two reducers are symmetrically arranged, which ensures rigidity of the system and improves noise, vibration and harshness (NVH) performance of the whole vehicle.

The present application is further described with reference to the attached drawings and embodiments.

## BRIEF DESCRIPTION OF THE DRAWINGS

FIG. 1 is a structural block diagram of an electric drive system according to the present application;

Fig. 2 is a structural block diagram of a transmission structure according to the present application;

Fig. 3 is a stereoscopic view of an electric drive system according to the present application;

Fig. 4 is a front view of an electric drive system according to the present application;

Fig. 5 is an exploded view corresponding to the stereoscopic view of the electric drive system according to the present application;

Fig. 6 is an enlarged schematic view of Part A in Fig. 5; and

Fig. 7 is an exploded view corresponding to the front view of the electric drive system according to the present application.

## DETAILED DESCRIPTION OF THE EMBODIMENTS

The following description is used to disclose the present application to enable those skilled in the art to implement the present application. The preferred embodiments in the following description are only examples, and those skilled in the art can think of other obvious variations. The basic principles of the present application defined in the following description can be applied to other embodiments, variations, improvements, equivalents and other technical solutions without departing from the spirit and scope of the present application.

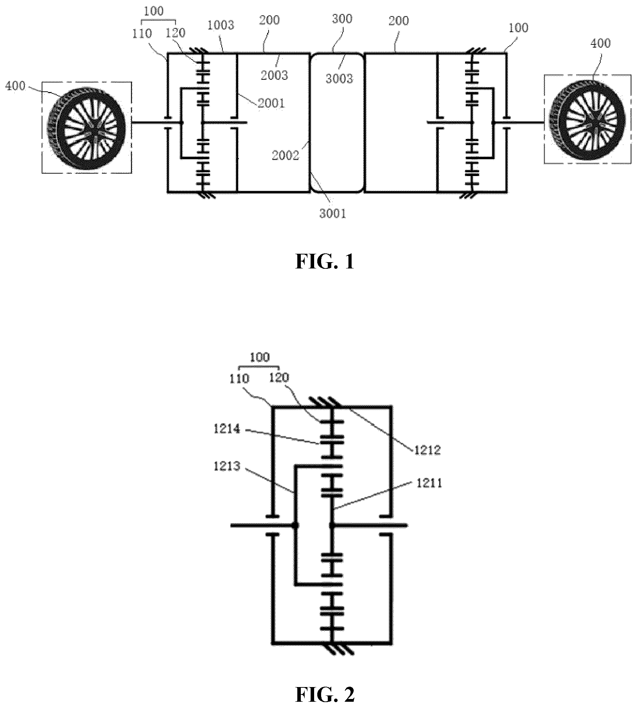

As shown in Figs. 1, 5 and 6, an electric drive system includes:

at least one motor 200 having an output end face 2001 and a non-output end face 2002 which are substantially parallel to each other;

at least one reducer 100 which is in transmission connection with a wheel 400, where the output end face 2001 of the motor 200 is connected to one side of the reducer 100 away from the wheel 400, and the motor 200 is in transmission connection with the reducer 100;

at least one controller 300 having a connecting surface 3001, where the center of the connecting surface 3001 is recessed to form a controller cavity 30011, the non-output end face 2002 of the motor 200 is connected to the connecting surface 3001 of the controller 300, and part of the motor 200 is embedded in the controller cavity 30011, and is configured to be surrounded by a controller cooling structure 3221 disposed on an inner wall of the controller cavity 30011.

The motor 200, the reducer 100 and the controller 300 are arranged side by side and are integrally connected and arranged between two wheels 400 with a fixed wheel distance, and part of the motor 200 is embedded in the controller cavity 30011 of the controller 300, thereby further reducing the overall axial dimension. Moreover, the controller cooling structure 320 is arranged on the inner wall of the controller cavity 30011. In this way, the motor 200, the reducer 100, the controller 300 and the like can be arranged between the two wheels with a fixed wheel distance, and the controller 300 and the motor 200 can be cooled, thereby ensuring the reliable operation of the system.

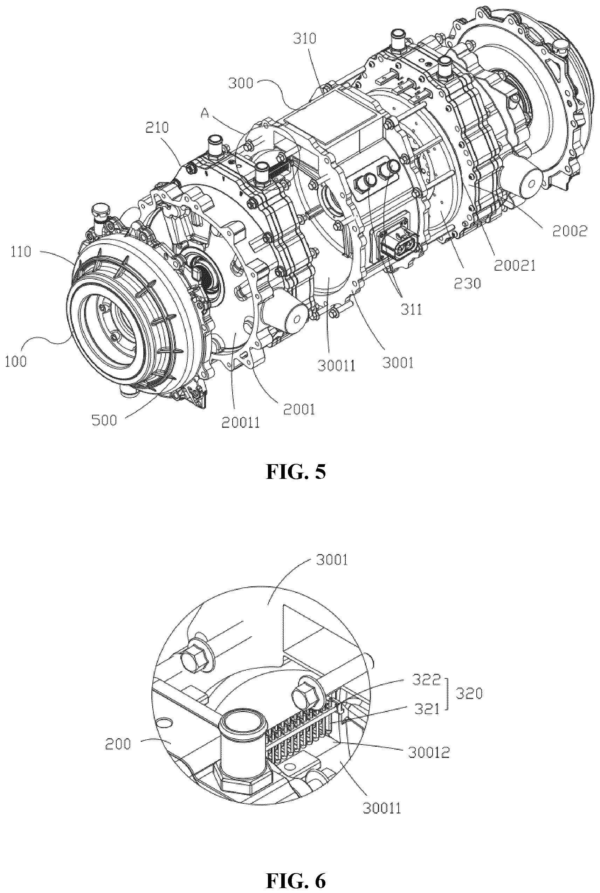

As shown in Fig. 5, the axial field motor 200 has the characteristics of small axial dimension, high power density, light weight, large output torque and so on. It can be seen that, according to the embodiment, the controller 300, the axial field motor 200 and the reducer 100 are arranged in a direction of the wheel distance and are integrally connected, so that more space can be provided between the two wheels 400 with a fixed wheel distance to increase the space for designing the reducer 100, and two axial field motors 200, two reducers 100 and the like can be arranged between the two wheels 400. Specifically, the motor 200 includes:

a motor housing 210, where the output end face 2001 and the non-output end face 2002 are formed on two axial sides of the motor housing 210, and the center of the non-output end face 2002 is recessed to form a motor cavity 20021, and the motor cavity 20021 is in communication with the controller cavity 30011 when the non-output end face 2002 is connected to the connecting surface 3001 of the controller 300;

at least one stator located in the motor cavity 20021;

at least one rotor 230, where an air gap surface is formed between the rotor 230 and the stator, the air gap surface is parallel to the controller 300 and the reducer 100, and one of the at least one rotor 230, which is located on one side of the stator facing the reducer 100, is embedded in the controller cavity 30011.

The axial dimension of the motor 200 is defined between the output end face 2001 and the non-output end face 2002, and the radial dimension of the motor 200 is obviously larger than the axial dimension of the motor 200. The air gap surface is parallel to the output end face 2001 and the non-output end face 2002, so that the motor is of a disc-shaped structure. That is, the axial field motor has an advantage of small axial dimension.

Since the rotor 230 is embedded in the controller cavity 30011, the controller cooling structure 320 on the inner wall of the controller cavity 3011 cools the rotor 230 radially. The stator may also be provided with a motor cooling structure, and the motor cooling structure is attached to the rotor, so that the cooling effect on the rotor 230 can be improved. The motor cooling structure and the controller cooling structure 320 may be cooling pipes for cooling through a cooling medium (including a cooling liquid or a cooling gas).

Further, the reducer 100 is relatively fixed, and the motor 200 is connected to the reducer 100 through the output end face 2001 of the motor 200. Each of the reducer 100, the controller 300 and the motor 200 is of a disc-shaped structure. The air gap surface of the motor 200 is parallel to the controller 300 and the reducer 100, so that the motor 200 is effectively supported between the reducer 100 and the controller 300. Therefore, the distance between the center of gravity of the motor 200 and the reducer 100 can be shortened, and the force arm is reduced, so that the generated bending moment is reduced, thereby improving the mounting stability and reliability of the motor, and preventing the reducer housing 110 from being broken and the like due to the fact that the reducer housing 110 is unable to bear the weight of the motor. Moreover, in the design process of increasing the torque of the motor by increasing the air gap surface, the force arm is always kept small, and the load on the reducer housing 110 is small, thus expanding the design space.

Based on different numbers of the stators and the rotors 230, the motor 200 may be classified into two types: a single-rotor single-stator axial field motor and a double-rotor single-stator axial field motor.

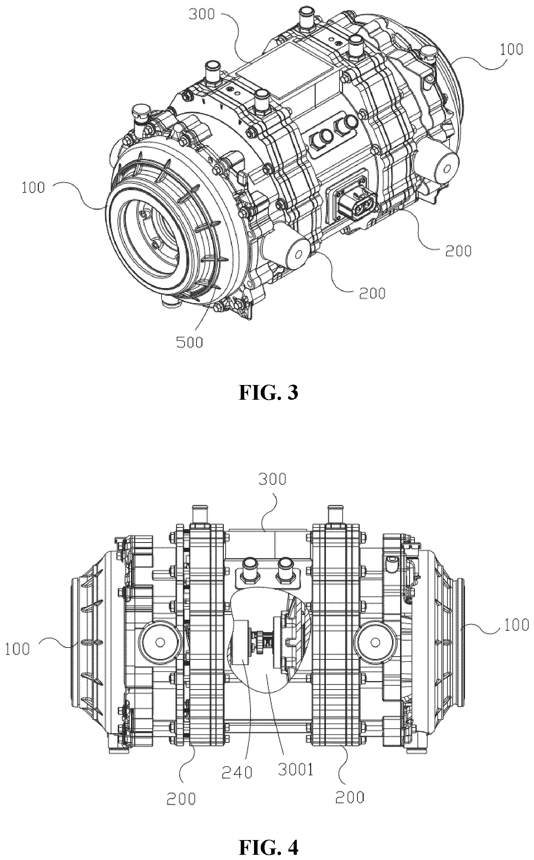

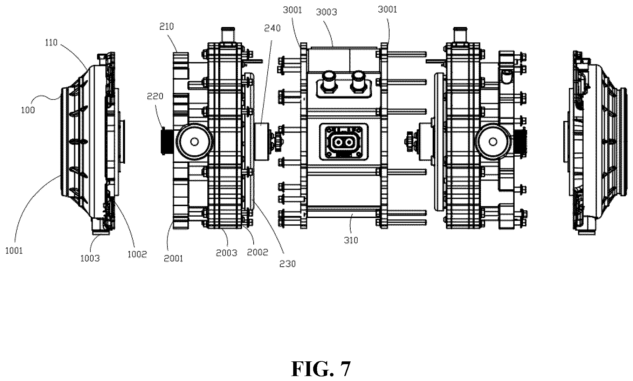

As shown in Figs. 4 and 7, the motor 200 further includes:

a rotary transformer chamber 240 embedded in the controller cavity 30011;

an output shaft 220, where one end of the output shaft 220 is connected to the rotary transformer chamber 240, and the other end of the output shaft 220 passes through the stator and extends out of the output end face 2001 to be connected to the reducer 100, and the rotor 230 is fixedly connected to the output shaft 220.

A bearing or the like is provided in the rotary transformer chamber 240, so that the output shaft 220 rotates relative to the motor housing 210. The rotary transformer chamber 240 is embedded in the controller cavity 30011, so that the structure is compact, and the overall axial dimension is reduced accordingly, so as to improve the utilization rate of design space.

As shown in Figs. 5 and 6, the inner wall of the controller cavity 30011 is recessed to form at least one accommodating cavity 30012, and the controller cooling structure 320 is detachably arranged in the accommodating cavity 30012.

The radial dimensions of the controller 300, the motor 200 and the reducer 100 are substantially equal, and the radial dimension of the motor 200 is obviously larger than the axial dimension of the motor 200. That is, as the motor 200 has a relatively large radial dimension, the controller 300 can be provided with the accommodating cavity 30012 for accommodating the controller cooling structure 320 on the inner wall of the controller cavity 30011, and the controller cavity 30011 can accommodate the rotor 230 of the motor 200. In addition, the axial dimension of each of the controller 300, the motor 200 and the reducer 100 may be smaller than its radial dimension. Therefore, the overall radial dimension can be ensured to be consistent, and the overall axial dimension can be reduced, so as to release more space between the two wheels with a fixed wheel distance to increase the design space.

Furthermore, the controller cooling structure 320 is detachably arranged in the accommodating cavity 30012 to facilitate maintenance and disassembly of the controller cooling structure 320. Referring to Figs. 5 and 6, the controller cooling structure 320 includes a cooling support 322 and multiple cooling pipes 321, and the multiple cooling pipes 321 are inserted into the cooling support 322. The cooling support 322 is inserted into the accommodating cavity 30012, so that the controller cooling structure 320 is detachably arranged in the accommodating cavity 30012. Moreover, when the controller cooling structure 320 is fixed in the accommodating cavity 30012, the multiple cooling pipes 321 can be sequentially communicated with a water inlet on an outer surface of the controller housing 310, so that a cooling medium can sequentially circulates in the multiple cooling pipes 321 to cool a circuit board in the controller housing 310 and the rotor 230 of the motor 200.

The reducer 100 may be designed by the following method, and the method includes the following step (a).

In step (a), the reducer 100 is designed based on the radial dimension of the motor 200 and a transmission ratio required by the electric drive system.

The motor 200 has the characteristics of small axial dimension, high power density, light weight, large output torque and so on. It can be seen that, according to the embodiment, the motor 200 and the reducer 100 are arranged in a direction of the wheel distance and are integrally connected, so that more space can be released between the two wheels 400 with a fixed wheel distance to increase the space for designing the reducer 100, and two motors 200, two reducers 100 and the like can be arranged between the two wheels 400. In addition, the reducer 100 is designed with the radial dimension of the motor 200 as an upper limit and based on the transmission ratio. Since the radial dimension of the motor 200 may be much larger than the axial dimension of the motor 200, the utilization rate of the design space of the reducer 100 can be further improved on the premise that the overall occupied space is small, and the reducer 100 with a large transmission ratio can be arranged to improve the acceleration of the starting of a vehicle.

As shown in Figs. 1 and 2, the reducer 100 is a planetary gear reducer. The planetary gear reducer has a relatively small axial length and a relatively large radial length, and can be well matched with the shape of the axial field motor to improve the space utilization rate. Compared with a conventional radial field motor, the combination of the planetary gear reducer and the axial field motor can enable the planetary gear reducer to have a large radial dimension on the premise that the volume is unchanged, thereby achieving a high transmission ratio and a high output torque.

The reducer 100 includes a reducer housing 110 and a transmission structure 120, and the step (a) further includes the following steps (a1) and (a2).

In step (a1), a radial upper limit dimension of the reducer housing 110 is obtained based on the radial dimension of the motor 200.

The radial dimension of the motor 200 is determined by the output torque of the motor 200. The larger the output torque of the motor 200, the larger the radial dimension of the motor 200. Therefore, based on the application environment of the electric drive system, the motor 200 with a corresponding radial dimension can be selected by determining the output torque of the motor 200.

In the step (a1), the radial upper limit dimension of the reducer housing 110 is determined based on the radial dimension of the motor 200, that is, the radial dimension of the reducer housing 110 does not exceed the radial dimension of the motor 200, so as to prevent the reducer 100 from protruding radially outside the motor 200 and increasing the overall occupied space.

In step (a2), the transmission structure 120 is designed based on the radial upper limit dimension of the reducer housing 110 and the transmission ratio.

The radial upper limit dimension of the reducer housing 110 can determine the complexity of the transmission structure 120. Since the radial dimension of the motor 200 may be much larger than the axial dimension of the motor 200, the reducer 100 with a large transmission ratio can be designed on the premise of ensuring that the overall occupied space is small.

Further, the greater the transmission ratio, the greater the output torque of the reducer 100 and the faster the acceleration of the starting of the vehicle. Similarly, the greater the transmission ratio, the more complex the transmission structure 120 and the larger the volume of the reducer housing 110 for accommodating the transmission structure 120. According to the embodiment, the reducer housing 110 has a relatively large radial upper limit dimension, which ensures that the occupied space is small and improves the utilization rate of the design space of the reducer 100.

Furthermore, referring to Figs. 1 and 2, the transmission structure 120 includes at least one driving gear 1211 and at least one driven gear 1212. The driving gear 1211 and the driven gear 1212 are in transmission connection with each other and are arranged along the radial direction of the reducer housing 110. The step (a2) further includes:

designing the driving gear 1211 and the driven gear 1212 conforming to the radial upper limit dimension of the reducer housing 110, based on the transmission ratio.

The number of the driving gears 1211 and the number of the driven gears 1212 determine the number of transmission ratio stages of the transmission structure 120. In the following, a first-stage transmission ratio shown in Fig. 2 is used as an example to describe the design process of the transmission structure 120. Each of the number of the driving gear 1211 and the number of the driven gear 1212 is one, that is, the transmission structure is of a first-stage transmission. The driven gear 1212 is a gear ring and is fixed. The driving gear 1211 of a gear set 121 is a sun gear, and the driving gear 1211 is rotatably arranged in the center of the gear ring and is connected to the axial field motor 200. Moreover, a planetary carrier 1214 is arranged between the driving gear 1211 and the driven gear 1212, and the planetary carrier 1214 is in transmission connection with the wheel 400. A planetary gear 1214 is in transmission connection between the planet carrier 1214 and each of the driving gear 1211 and the driven gear 1212.

Referring to Fig. 2, the driving gear 1211 and the driven gear 1212 are arranged along the radial direction of the reducer housing 110, that is, the radial dimension of the reducer housing 110 is related to the diameters of the driving gear 1211 and the driven gear 1212, and the following formula may be used for calculation:

$$n = 1 + R/r;$$

where n is the transmission ratio, R is an indexing circle radius of the driven gear 1212, and r is an indexing circle radius of the driving gear.

The transmission ratio may be determined by the output torque of the motor 200 and the output torque of the reducer 100. The output torque of the reducer 100 is an output torque required by the electric drive system. That is, the output torque of the reducer 100 is divided by the output torque of the axial field motor 200 to obtain the transmission ratio. Based on this, the driving gear 1211 and the driven gear 1212 that are accommodated in the reducer housing 110 can be obtained by substituting the transmission ratio into the above formula and based on the radial upper limit dimension of the reducer housing 110.

It should be noted that, the actual radial dimension of the reducer housing 110 is not necessarily the same as the radial upper limit dimension of the reducer housing 110, that is, the actual radial dimension of the reducer housing 110 may be smaller than the radial upper limit dimension of the reducer housing 110. The radial upper limit dimension of the reducer housing 110 refers to the maximum radial dimension that can be allowed, so as to prevent the reducer housing 110 from increasing the occupied space due to the oversized size of the reducer housing 110.

The transmission structure 120 may be of two stages or more, so the above formula is adjusted as follows: an indexing circle radius of a driven gear of each pair of meshing gear pairs is divided by an indexing circle radius of a driving gear of the pair of meshing gear pairs to obtain multiple results, and the obtained results are multiplied and then is added by one to obtain the transmission ratio.

From the above, it can be seen that only the radial dimension of the reducer 100 is adjusted, while the axial dimension of the reducer 100 is almost unchanged. That is, it is ensured that the axial dimension of the reducer 100 is small, and the space for designing the reducer 100 can be increased, so as to avoid that the reducer 100 cannot be mounted between the two wheels 400 with a fixed wheel distance, and further avoid that the controller 300 and other device cannot be arranged between the two wheels 400, which constrains the design space.

It can be seen that, the reducer 100 may be the same as the motor 200, that is, the reducer 100 is also of a disc-shaped structure, so that the space between the two wheels 300 can be released to improve the utilization rate of the design space. The motor 200 also has the characteristics that during the power design of the motor 200, only the radial direction of the motor 200 is adjusted, while the axial dimension of the motor 200 is almost unchanged, which effectively improves the utilization rate of the design space, so that the two motors 200 and the two reducers 100 can be arranged between the two wheels 400, and the controllers 300 can also be arranged between the two wheels 400.

As shown in Fig. 5, the center of the output end face 2001 is recessed to form an auxiliary cavity 20011, and part of the reducer 100 is embedded in the auxiliary cavity 20011, which can also make the overall structure compact and release the space between the two wheels with a fixed wheel distance, so that the two motors 200, the two reducers 100 and the like can be mounted between the two wheels. Part of the transmission structure 120 of the reducer 100 can be embedded in the auxiliary cavity 20011, and a reducer cooling structure may also be provided in the auxiliary cavity 20011 to ensure that the overall structure is compact and that cooling can be achieved.

Preferably, in a case that the motor 200 is an axial field motor with a single stator and a single rotor, the stator of the motor 200 is fixed at the bottom of the motor cavity 20021, and the reducer cooling structure is also fixed at the bottom of the auxiliary cavity 20011. The reducer cooling structure can be arranged close to the stator by shortening the distance between the bottom of the motor cavity 20021 and the bottom of the auxiliary cavity 20011, so as to further improve the cooling performance and ensure the reliability of the system.

As shown in Figs. 3 to 5, the reducer 100 includes a reducer housing 110, and the controller 300 includes a controller housing 310. The motor housing 210 and the controller housing 310 are integrally connected, and/or the motor housing 210 and the reducer housing 110 are integrally connected.

As an example, the motor housing 210 and the reducer housing 110 are integrally connected, and the two may be fastened by multiple bolts. The multiple bolts are arranged at peripheries of the motor housing 210 and the reducer housing 110 and can be hidden inside, so as to make the structure compact and prevent the occupied space from increasing.

As shown in Figs. 1 and 7, the reducer housing 110 includes a reducer periphery 1003 that defines the radial dimension of the reducer 110, the controller housing 310 includes a controller periphery 3003 that defines the radial dimension of the controller 300, and the motor housing 210 includes a motor periphery 2003 that defines the radial dimension of the motor 200. Since the radial dimensions of the reducer 100, the controller 300 and the motor 200 are substantially equal, the reducer periphery 1003, the controller periphery 3003 and the motor periphery 2003 are substantially flush.

It should be noted that, when the actual radial dimension of the reducer housing 110 is designed to be the same as the radial dimension of the motor 200, the motor periphery 2003 and the reducer periphery 1003 are completely flush. In the embodiment, the actual radial dimension of the reducer housing 110 is not limited to being smaller than the radial dimension of the motor 200, so the motor periphery 2003 and the reducer periphery 1003 may be not flush at all, or partially flush.

As shown in Fig. 1 to Fig. 7, each of the number of the controllers 300, the number of the motors 200 and the number of the reducers 100 is two. The two controllers 300 are connected in such a way that the connecting surfaces 3001 of the two controllers 300 are away from each other, and the connecting surface 3001 of each of the two controllers 300 is correspondingly connected to the non-output end face 2002 of one of the two motors 200, and the output end face 2001 of each of the two motors 200 facing away from the controller 300 is connected to one of the two reducers 100, so that the controller 300, the motor 200 and the reducer 100 at the same side are connected in sequence.

It can be seen that, the two motors 200 can output power independently, and can drive the two wheels 400 in a distributed manner in cooperation with an electronic differential system, so as to realize intelligent control of the whole vehicle. Moreover, a small turning radius and stable controllability can be realized, and the problems such as slope slipping and unilateral slipping can be effectively solved.

As a preferred embodiment, the two controllers 300 are arranged in a common controller housing 310, or the two controllers 300 are integrally connected. The controller housing 310 of the controller 300 and the motor housing 210 of the motor 200 share a common housing, and may be integrated. In this way, a high-voltage wiring harness, a low-voltage wiring harness and the like between the motor 200 and the controller 300 can be omitted, so that the structure is compact and simple, and the manufacturing cost is reduced.

The non-output end face 2002 of the motor 200 is provided with an interface. In the case that the controller 300 is integrally connected to the non-output end face 2002, the controller 300 is electrically connected to the motor 200 through the interface of the motor 200, which can also prevent the wiring harnesses from being exposed and increasing the occupied space and avoid a wiring harness connection process.

As shown in Fig. 5, at least one of the following components is provided with a reinforcing rib 500:
the bottom of the auxiliary cavity 20011, the bottom of the accommodating cavity 30012, the reducer periphery 1003, the controller periphery 3003 and the motor periphery 2003.

By arranging the reinforcing rib 500, the structural strength of the mounted parts can be ensured, and the volume can be reduced accordingly. The bottom of the auxiliary cavity 20011 is described as an example. Multiple reinforcing ribs 500 are arranged at the bottom of the auxiliary cavity 20011 and are spaced apart from each other, so that the distance between the bottom of the auxiliary cavity 20011 and the bottom of the motor cavity 20021 can be reduced, and it is ensured that plate bodies defined by the bottom of the auxiliary cavity 20011 and the bottom of the motor cavity 20021 can support the stator and the reducer cooling structure.

As shown in Fig. 1, the axial field motors 200 on both sides and the reducers 100 on both sides are arranged correspondingly, which ensures rigidity of the system and improves noise, vibration and harshness (NVH) performance of the whole vehicle.

In summary, the motors 200, the reducers 100 and the controllers 300 are arranged side by side, and are integrally connected between the two wheels 400 with a fixed wheel distance. Part of the motor 200 is embedded in the controller cavity 30011 of the controller 300, thereby further reducing the overall axial dimension. Moreover, the controller cooling structure 320 is provided on the inner wall of the controller cavity 30011, so that the motors 200, the reducers 100, the controllers 300 and the like can be arranged between the two wheels with a fixed wheel distance, the controllers 300 and the motors 200 can be cooled, thereby ensuring the reliable operation of the system. In addition, the motor 200 is an axial field motor, which has the characteristics of small axial dimension, high power density, light weight and large output torque. It can be seen that, according to the embodiment, the motors 200 and the reducers 100 are arranged in the wheel distance direction and are connected integrally, which can release more space between the two wheels 400 with a fixed wheel distance to increase the space for designing the reducers 100.

The above embodiments are only used to illustrate the technical ideas and characteristics of the present application, and the purpose is to enable those skilled in the art to understand the content of the present application and implement it accordingly. The scope of the present application is not limited only by the embodiments. That is, any equivalent changes or modifications made based on the spirit disclosed in the present application still fall within the scope of the present application.

## Claims

1. An electric drive system comprising:

   at least one motor (200) having an output end face (2001) and a non-output end face (2002) which are substantially parallel to each other;
   at least one reducer (100), which is in transmission connection with a wheel (400), wherein the output end face (2001) of the motor (200) is connected to one side of the reducer (100) away from the wheel (400), and the motor (200) is in transmission connection with the reducer (100); and
   at least one controller (300) having a connecting surface (3001), wherein the center of the connecting surface (3001) is recessed to form a controller cavity (30011), and the non-output end face (2002) of the motor (200) is connected to the connecting surface (3001) of the controller (300), and part of the motor (200) is embedded in the controller cavity (30011) and is surrounded by a controller cooling structure (320) disposed on an inner wall of the controller cavity (30011).

2. The electric drive system according to claim 1, wherein the motor (200) comprises:

   a motor housing (210), wherein the output end face (2001) and the non-output end face (2002) are formed on two axial sides of the motor housing (210), the center of the non-output end face (2002) is recessed to form a motor cavity (20021), and the motor cavity (20021) is in communication with the controller cavity (30011) when the non-output end face (2002) is connected to the connecting surface (3001) of the controller (300);
   at least one stator located in the motor cavity (20021); and
   at least one rotor (230), wherein an air gap surface is formed between the rotor (230) and the stator, and one of the at least one rotor (230) located on one side of the stator facing the reducer (100) is embedded in the controller cavity (30011).

3. The electric drive system according to claim 2, wherein the air gap surface is parallel to the controller (300) and the reducer (100).

4. The electric drive system according to claim 2, wherein the motor (200) further comprises:

   a rotary transformer chamber (240) embedded in the controller cavity (30011); and
   an output shaft (220), wherein one end of the output shaft (220) is connected to the rotary transformer chamber (240), the other end of the output shaft (220) passes through the stator and extends out of the output end face (2001) to be connected to the reducer (100), and the rotor (230) is fixedly connected to the output shaft (220).

5. The electric drive system according to claim 2, wherein the inner wall of the controller cavity (30011) is recessed to form at least one accommodating cavity (30012), and the controller cooling structure (320) is detachably arranged in the accommodating cavity (30012).

6. The electric drive system according to claim 4, wherein the center of the output end face (2001) is recessed to form an auxiliary cavity (20011), and part of the reducer (100) is embedded in the auxiliary cavity (20011).

7. The electric drive system according to claim 6, wherein

   the reducer (100) comprises a reducer housing (110), and the controller (300) comprises a controller housing (310); and
   the motor housing (210) and the controller housing (310) are integrally connected, and/or the motor housing (210) and the reducer housing (110) are integrally connected.

8. The electric drive system according to claim 7, wherein the reducer (100) is a planetary gear reducer, the reducer housing (110) includes a reducer periphery (1003), the controller housing (310) includes a controller periphery (3003), the motor housing (210) includes a motor periphery (2003), and the reducer periphery (1003), the controller periphery (3003) and the motor periphery (2003) are substantially flush.

9. The electric drive system according to claim 8, wherein at least one of a bottom of the auxiliary cavity (20011), a bottom of the accommodating cavity (30012), the reducer periphery (1003), the controller periphery (3003) and the motor periphery (2003) is provided with a reinforcing rib (500).

**EP 4 538 076 A1**

**10.** The electric drive system according to claim 1, wherein

    each of the number of the controllers (300), the number of the motors (200) and the number of the reducers (100) is two;
the two controllers (300) are connected in such a way that the connecting surfaces (3001) of the two controllers (300) face away from each other; the connecting surface (3001) of each of the two controllers (300) is correspondingly connected to the non-output end surface (2002) of one of the two motors (200), and the output end face (2001) of each of the two motors (200) away from the controller (300) is connected to one of the two reducers (100), so that the controller (300), the motor (200) and the reducer (100) on the same side are connected in sequence.

**FIG. 1**

**FIG. 2**

**FIG. 3**

**FIG. 4**

**FIG. 5**

**FIG. 6**

**FIG. 7**

## INTERNATIONAL SEARCH REPORT

| International application No. |
|---|
| **PCT/CN2023/112269** |

**A.   CLASSIFICATION OF SUBJECT MATTER**

B60K1/00(2006.01)i;  B60K7/00(2006.01)i;  B60K17/04(2006.01)i;  H02K5/04(2006.01)i;  H02K7/116(2006.01)i;  H02K9/22(2006.01)i

According to International Patent Classification (IPC) or to both national classification and IPC

**B.   FIELDS SEARCHED**

Minimum documentation searched (classification system followed by classification symbols)

IPC:  B60K H02K

Documentation searched other than minimum documentation to the extent that such documents are included in the fields searched

Electronic data base consulted during the international search (name of data base and, where practicable, search terms used)

CNABS; CNTXT; CNKI; ENTXTC; ENTXT; EPTXT; USTXT; VEN: 上海盘毂动力科技股份有限公司, 电机, 电动机, 马达, 控制器, 控制设备, 控制元件, 控制部件, 减速器, 嵌, 内置, 容纳, 空间, 尺寸, 体积, 节约, 减小, 缩小, 轴向, 盘式, 盘形, 转子, 定子, control+, motor?, electric+, axial, flux, gap, disk, rotor?, stator?, volume, space, size, dimension

**C.   DOCUMENTS CONSIDERED TO BE RELEVANT**

| Category* | Citation of document, with indication, where appropriate, of the relevant passages | Relevant to claim No. |
|---|---|---|
| PX | CN 115257328 A (SHANGHAI PANGOOD POWER TECHNOLOGY CO., LTD.) 01 November 2022 (2022-11-01)<br>　　claims 1-10 | 1-10 |
| Y | CN 106080222 A (LIU XIAO) 09 November 2016 (2016-11-09)<br>　　description, paragraphs [0004]-[0051], and figures 1-8 | 1-10 |
| Y | CN 112299272 A (ZHEJIANG YONGTIAN MECHANICAL AND ELECTRICAL MANUFACTURED CO., LTD.) 02 February 2021 (2021-02-02)<br>　　description, paragraphs [0003]-[0025], and figure 1 | 1-10 |
| Y | CN 109291785 A (WUHAN YISIYIDE AUTOMOBILE TECHNOLOGY CO., LTD.) 01 February 2019 (2019-02-01)<br>　　description, paragraphs [0016]-[0099], and figures 1-7 | 6-9 |
| A | CN 105305713 A (JASMIN INTERNATIONAL AUTO RESEARCH &DEVELOPMENT (BEIJING) CO., LTD.) 03 February 2016 (2016-02-03)<br>　　entire document | 1-10 |

☑ Further documents are listed in the continuation of Box C.　　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 October 2023** | **13 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/112269**

**C.    DOCUMENTS CONSIDERED TO BE RELEVANT**

| Category* | Citation of document, with indication, where appropriate, of the relevant passages | Relevant to claim No. |
|---|---|---|
| A | CN 108501672 A (HUAWEI TECHNOLOGIES CO., LTD.) 07 September 2018 (2018-09-07) entire document | 1-10 |
| A | CN 114475220 A (YOUPAO AUTOMOTIVE TECHNOLOGY (SHANGHAI) CO., LTD.) 13 May 2022 (2022-05-13) entire document | 1-10 |
| A | KR 20180081336 A (HANON SYSTEMS) 16 July 2018 (2018-07-16) entire document | 1-10 |
| A | WO 2012042278 A2 (ETS DESIGN LTD. et al.) 05 April 2012 (2012-04-05) entire document | 1-10 |

Form PCT/ISA/210 (second sheet) (July 2022)

**INTERNATIONAL SEARCH REPORT**
**Information on patent family members**

International application No.

**PCT/CN2023/112269**

| Patent document cited in search report | | | Publication date (day/month/year) | Patent family member(s) | | | Publication date (day/month/year) |
|---|---|---|---|---|---|---|---|
| CN | 115257328 | A | 01 November 2022 | None | | | |
| CN | 106080222 | A | 09 November 2016 | CN | 106080222 | B | 21 December 2018 |
| CN | 112299272 | A | 02 February 2021 | CN | 213738346 | U | 20 July 2021 |
| | | | | EP | 4001200 | A1 | 25 May 2022 |
| CN | 109291785 | A | 01 February 2019 | CN | 209552931 | U | 29 October 2019 |
| CN | 105305713 | A | 03 February 2016 | None | | | |
| CN | 108501672 | A | 07 September 2018 | None | | | |
| CN | 114475220 | A | 13 May 2022 | None | | | |
| KR | 20180081336 | A | 16 July 2018 | KR | 102400801 | B1 | 24 May 2022 |
| WO | 2012042278 | A2 | 05 April 2012 | WO | 2012042278 | A3 | 26 September 2013 |
| | | | | GB | 201016603 | D0 | 17 November 2010 |
| | | | | GB | 2484147 | A | 04 April 2012 |

Form PCT/ISA/210 (patent family annex) (July 2022)